# EUROPEAN PATENT APPLICATION

(11) **EP 1 640 978 A2**
(43) Date of publication of application: **29.03.2006**
(21) Application number: 05255942.4
(22) Date of filing: 23.09.2005
(51) Int. Cl.: G11B 7/0045

(54) **Optical disk recording apparatus and method thereof**

(30) Priority: 24.09.2004 KR 2004076850
(71) Applicant: Samsung Electronics Co., Ltd., Suwon-si, Gyeonggi-Do (KR)
(72) Inventor: Kim, Min-seok, Yeongtong-gu, Suwon-si, Gyeonggi-do (KR); Kang. Kyung-pil, 5- dong, Gwanak-gu, Seoul (KR)
(74) Representative: Robinson, Ian Michael

(57) **Abstract**

An apparatus and a method for optical disk recording includes a storing unit (160) to store recording patterns according to an optical disk type and an optical disk manufacturer. A recording unit (120) reads basic information from a provided optical disk and records data according to a predetermined recording pattern. A MI extracting unit (130) extracts the MI from the basic information and a controlling unit (150) controls the recording unit (120) to record data according to a recording pattern corresponding to the manufacturer of the provided optical disk based on the extracted MI when a recording pattern corresponding to the type of the inserted optical disk is not stored in the storing unit (160). Accordingly, the optical disk recording apparatus records data according to the optimal recording pattern when the recording pattern of the provided optical disk is not provided.

## Description

The present invention relates to an optical disk recording apparatus and a method thereof and more particularly, to an optical disk recording apparatus for recording data on an optical disk according to a predetermined recording pattern and a method thereof.

An optimal recording pattern differs according to an optical disk. That is, the optimal recording pattern differs according to the different types of the optical disks, although the optical disks are manufactured by same manufacturer.

Accordingly, an optical disk recording apparatus includes a memory storing various recording patterns. The optical disk recording apparatus reads a predetermined recording pattern corresponding to a write strategy (WS) of a provided optical disk from the memory, and records data on the provided optical disk according to the read predetermined recording pattern.

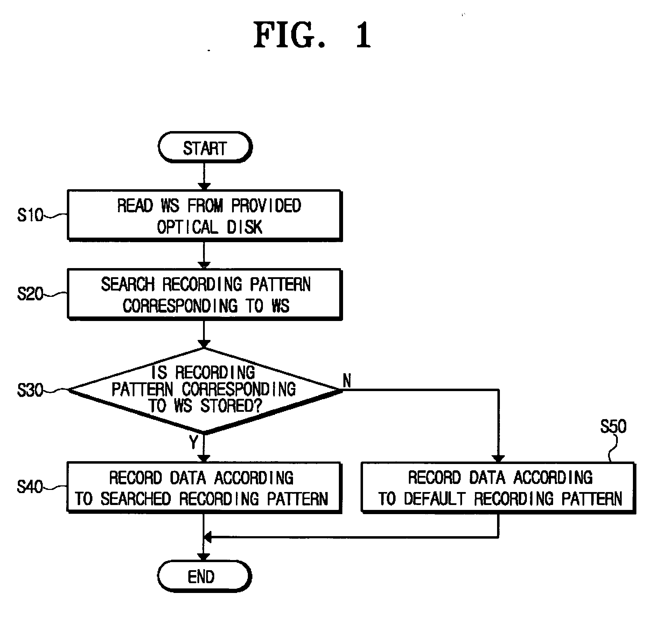

Hereinafter, operations of a conventional optical disk recording apparatus are explained by referring to Figure 1. Figure 1 is a flowchart of a conventional method for recording data on an optical disk.

Referring to Figure 1, the conventional optical disk recording apparatus reads a write strategy (WS) of a provided optical disk from the provided optical disk at S10. The optical disk recording apparatus searches for a recording pattern corresponding to the WS in a memory at S20.

If there is a recording pattern corresponding to the WS in the memory, at S30, the optical disk recording apparatus performs a recording operation according to the searched recording pattern at S40.

If a recording pattern corresponding to the WS is not stored in the memory at S30, the optical disk recording apparatus performs the recording operation according to a default recording pattern at S50. The default recording pattern has been developed for the following reasons. There are too many types of optical disks manufactured by various manufacturers, and it is impossible to store all recording patterns according to all types and manufacturers of the optical disks in a memory of the optical disk recording apparatus. Also, the optical disk recording apparatus does not include a recording pattern of an optical disk which is produced later than the optical disk recording apparatus. Therefore, the default recording pattern has been developed.

If a recording pattern for the provided optical disk is not stored in the optical disk recording apparatus, the optical disk recording apparatus performs the recording operation according to the default recording pattern at S50. However, the default recording pattern may differ completely from the recording pattern of the provided optical disk. Even if the default recording pattern differs from the recording pattern of the provided optical disk, the conventional optical disk recording apparatus performs the recording operation according to the default recording pattern when there is no recording pattern of the provided optical disk stored in the memory. As a result, conventional optical disk recording apparatus may incorrectly record data on the provided optical disk, so that the provided optical disk is wasted.

According to the present invention there is provided an apparatus and method as set forth in the appended claims. Preferred features of the invention will be apparent from the dependent claims, and the description which follows.

The concept discussed herein attempts to address the above-mentioned problems. An aspect of the present general inventive concept is to provide an optical disk recording apparatus and a method thereof for determining an optimal recording pattern of a provided optical disk when a recording pattern corresponding to a write strategy of the provided optical disk is not obtained, and recording data on the provided optical disk according to the determined optimal recording pattern.

In accordance with an aspect of the present invention, there is provided an optical disk recording apparatus, including: a storing unit to store recording patterns corresponding to an optical disk type and recording patterns corresponding to an optical disk manufacturer; a recording unit to read basic information recorded in a provided optical disk and recording data on the provided optical disk according to a predetermined recording pattern; a manufacturer information (MI) extracting unit to extract manufacturer information (MI) including information about a type of the provided optical disk and a manufacturer of the provided optical disk from the basic information ; and a controlling unit to control the recording unit to record data on the provided optical disk according to a recording pattern corresponding to the manufacturer of the provided optical disk when a recording pattern corresponding to the type of the provided optical disk is not stored in the storing unit.

Preferably, the optical disk recording apparatus further includes a write strategy (WS) extracting unit to extract a write strategy (WS) from the basic information, and the controlling unit may control the recording unit to record data on the provided optical disk according to a recording pattern most similar to a recording pattern corresponding to the WS of the provided optical disk among the recording patterns stored in the storing unit when a recording pattern corresponding to the manufacturer of the provided optical disk and a recording pattern corresponding to the type of the provided optical disk are not stored in the storing unit.

The optical disk recording apparatus further includes a write strategy (WS) extracting unit to extract a write strategy (WS) from the basic information, and the controlling unit may determine a recording pattern of the provided optical disk by comparing a first test result from a first test recording that performs a recording operation according to a recording pattern corresponding to the extracted manufacturer of the provided optical disk, and a second test result from a second test recording that performs a recording operation according to a recording pattern most similar to a recording pattern corresponding to the extracted WS of the provided optical disk among recording patterns stored in the storing unit, and control the recording unit to record data on the provided optical disk according to the determined recording pattern when a recording pattern corresponding to the extracted type of the provided optical disk is not stored in the storing unit.

The optical disk recording apparatus further includes a write strategy extracting unit to extract the write strategy of the inserted optical disk from the basic information, and the controlling unit may determine a recording pattern of the provided optical disk by comparing a first test result from a first test recording that performs a recording operation according to a recording pattern corresponding to the extracted manufacturer of the provided optical disk and a second test result from a second test recording that performs a recording operation according to a recording pattern most similar to a recording pattern corresponding to the extracted WS of the provided optical disk among recording patterns stored in the storing unit, and control the recording unit to record data on the provided optical disk according to the determined recording pattern when a recording pattern corresponding to the extracted type of the provided optical disk is stored in the storing unit.

In accordance with another aspect of the present invention, there is provided an optical disk recording method in an optical disk recording apparatus having a storing unit storing recording patterns corresponding to optical disk types and recording patterns corresponding to optical disk manufacturers, the optical disk recording method including: reading basic information recorded on a provided optical disk; extracting information about a type and a manufacturer of the provided optical disk from the basic information; and recording data on the provided optical disk based on a recording pattern corresponding to the manufacturer of the provided optical disk when a recording pattern corresponding to the type of the provided optical disk is not stored in the storing unit.

The optical disk recording method may further include: extracting a write strategy (WS) of the provided optical disk from the basic information, and controlling the recording unit to record data on the provided optical disk based on a recording pattern most similar to a recording pattern corresponding to the WS of the provided optical disk among the recording patterns stored in the storing unit when a recording pattern corresponding to the manufacturer of the provided optical disk and a recording pattern corresponding to the type of the provided optical disk are not stored in the storing unit.

The optical disk recording method may further include: extracting a write strategy (WS) of the provided optical disk from the basic information; determining a recording pattern of the provided optical disk by comparing a first test result from a first test recording that performs a recording operation according to a recording pattern corresponding to the extracted manufacturer of the provided optical disk and a second test result from a second test recording that performs a recording operation according to a recording pattern most similar to a recording pattern corresponding to the extracted WS of the provided optical disk among recording patterns stored in the storing unit when a recording pattern corresponding to the extracted type of the provided optical disk is not stored in the storing unit; and recording data on the provided optical disk based on the determined recording pattern.

The optical disk recording method may further include: extracting the write strategy of the inserted optical disk from the basic information; determining a recording pattern of the provided optical disk by comparing a first test result from a first test recording that performs a recording operation according to a recording pattern corresponding to the extracted manufacturer of the provided optical disk and a second test result from a second test recording that performs a recording operation according to a recording pattern most similar to a recording pattern corresponding to the extracted WS of the provided optical disk among recording patterns stored in the storing unit when a recording pattern corresponding to the extracted type of the provided optical disk is stored in the storing unit; and recording data on the provided optical disk based on the determined recording pattern.

In accordance with another aspect of the present invention, there is provided an optical disk recording method including: reading basic information recorded on a provided optical disk; extracting information about a manufacturer of the provided optical disk from the basic information; and recording data on the provided optical disk based on a previously stored recording pattern corresponding to the manufacturer of the provided optical disk if available.

In accordance with another aspect of the present invention, there is provided an optical disk recording method including: reading a provided optical disk to determine whether a recording pattern corresponding to a write strategy of the provided optical disk, is accessible; determining an optimal recording pattern of the provided optical disk when the recording pattern corresponding to the write strategy of the provided optical disk, is not accessible; and recording data on the provided optical disk based on the determined optimal recording pattern.

In accordance with another aspect of the present invention, there is provided an optical disk recording apparatus including: means for reading a provided optical disk to determine whether a recording pattern corresponding to a write strategy of the provided optical disk, is accessible; means for determining an optimal recording pattern of the provided optical disk when the recording pattern corresponding to the write strategy of the provided optical disk, is not accessible; and means for recording data on the provided optical disk based on the determined optimal recording pattern.

Additional aspects and/or advantages of the invention will be set forth in part in the description which follows and, in part, will be apparent from the description, or may be learned by practice of the invention.

These and/or other aspects and advantages of the invention will become apparent and more readily appreciated from the following description of the embodiments, taken in conjunction with the accompanying drawings in which:
Figure 1 is a flowchart of a conventional method for recording data on a provided optical disk;
Figure 2 is a block diagram of an optical disk recording apparatus in accordance with an embodiment of the present invention;
Figure 3 is a diagram of a storing unit to store recording patterns; and
Figure 4 is a flowchart of a method for recording data on a provided optical disk in accordance with an embodiment of the present invention.

Reference will now be made in detail to the embodiments of the present invention, examples of which are illustrated in the accompanying drawings, wherein like reference numerals refer to like elements throughout. The embodiments are described below to explain the present invention by referring to the figures.

In the following description, the same drawing reference numerals are used for the same elements throughout the drawings. The matters defined in the description such as the detailed construction and elements are only provided to assist in a comprehensive understanding of the invention. Thus, it is apparent that the present invention can be carried out in other ways. Also, well-known functions or constructions are not described in detail since that would obscure the invention in unnecessary detail.

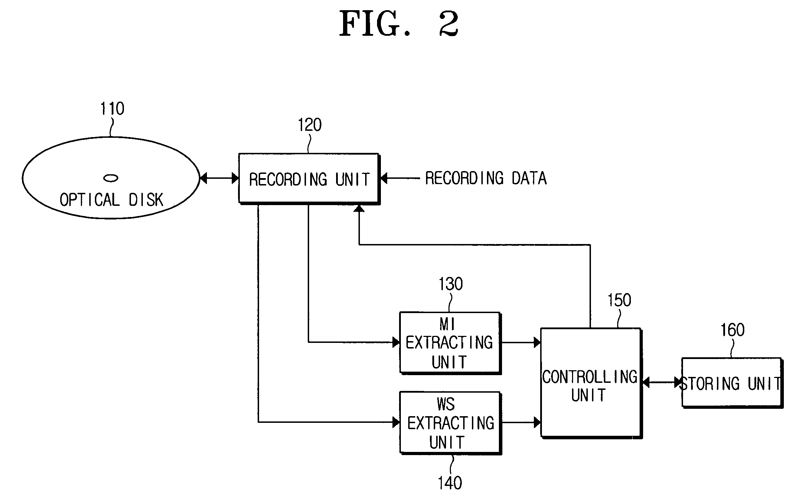

Figure 2 is a block diagram of an optical disk recording apparatus in accordance with an embodiment of the present invention. By referring to Figure 2, the optical disk recording apparatus includes a recording unit 120, a MI extracting unit 130, a WS extracting unit 140, a controlling unit 150 and a storing unit 160.

The recording unit 120 reads basic information recorded in an optical disk 110 which is provided to the optical disk recording apparatus, and transfers the basic information to the MI extracting unit 130 and the WS extracting unit 140. The optical disk 110 may be any of a variety of types of optical disks, such as a digital video disk (DVD) or a compact disk (CD).

The basic information which is read by the recording unit 120, includes information about specifications of the provided optical disk 110. The basic information is recorded at a predetermined region of the provided optical disk when the optical disk 110 is manufactured. The basic information includes manufacturing information (MI) and a write strategy (WS) of the optical disk 110. The MI includes information about a manufacturer of the optical disk 110 and a type of the optical disk 110.

The recording unit 120 records data on the optical disk 110 according to a predetermined recording pattern. The predetermined recording pattern is determined by the controlling unit 150. The MI extracting unit 130 receives the basic information from the recording unit 120 and extracts the MI of the optical disk 110 from the received basic information. The extracted MI is transferred to the controlling unit 150. The WS extracting unit 140 receives the basic information from the recording unit 120 and extracts the WS of the optical disk 110. The extracted WS is transferred to the controlling unit 150.

The storing unit 160 is a recording medium storing recording patterns. The storing unit 160 may be embodied as a flash memory. That is, the storing unit 160 stores recording patterns corresponding to types and manufacturers of the optical disks. The recording patterns will be explained below.

The controlling unit 150 searches for a recording pattern suitable to the provided optical disk 110 based on the extracted MI and WS. After searching, the controlling unit 150 controls the recording unit 120 to perform a recording operation based on the recording pattern obtained from the search.

As mentioned above, the recording pattern differs according to an optical disk. That is, the recording pattern differs based on the manufacturer of the optical disk. Also, the recording pattern differs based on the optical disk type, even though the optical disk is produced by the identical manufacturer. However, the recording patterns for one manufacturer may be similar even though the types of the optical disks are different.

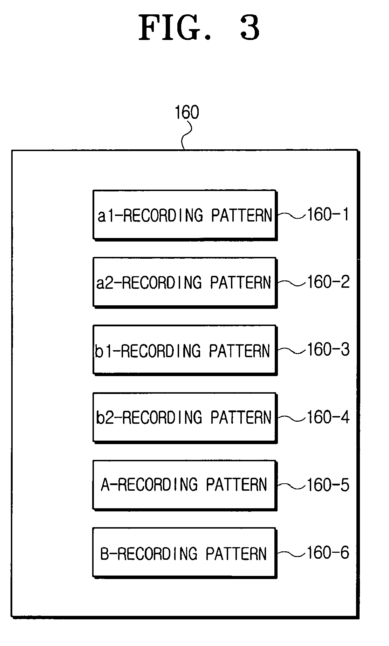

Figure 3 is a diagram showing a storing unit 160 of the optical disk recording apparatus in Figure 2. As shown in Figure 3, the storing unit 160 stores recording patterns such as an a1-recording pattern 160-1, an a2-recording pattern 160-2, a b1-recording pattern 160-3, a b2-recording pattern 160-4, an A-recording pattern 160-5 and a B-recording pattern 160-6.

The designations "a1" and "a2" represent a type of optical disk produced by manufacturer A. The designations "b1" and "b2" represent a type of optical disk produced by manufacturer B. Accordingly, the a1-recording pattern 160-1 corresponds to a recording pattern for an a1 type optical disk manufactured by manufacturer A and the a2-recording pattern 160-2 corresponds to a recording pattern for an a2 type optical disk manufactured by manufacturer A. The b1-recording pattern 160-3 corresponds to a recording pattern for a b1 type optical disk manufactured by manufacturer B and the b2-recording pattern 160-4 corresponds to a recording pattern for a b2 type optical disk manufactured by manufacturer B.

Furthermore, the A-recording pattern 160-5 is a general recording pattern for optical disks manufactured by manufacturer A. The A-recording pattern 160-5 may be generated by the controlling unit 150 based on the a1-recording pattern 160-1 and the a2-recording pattern 160-2 and stored in the storing unit 160.

The B-recording pattern 160-6 is a general recording pattern for optical disks manufactured by the B manufacturer. The B-recording pattern 160-6 may be generated by the controlling unit 150 based on the b1-recording pattern 160-3 and the b2-recoridng pattern 160-4 and stored in the storing unit 160.

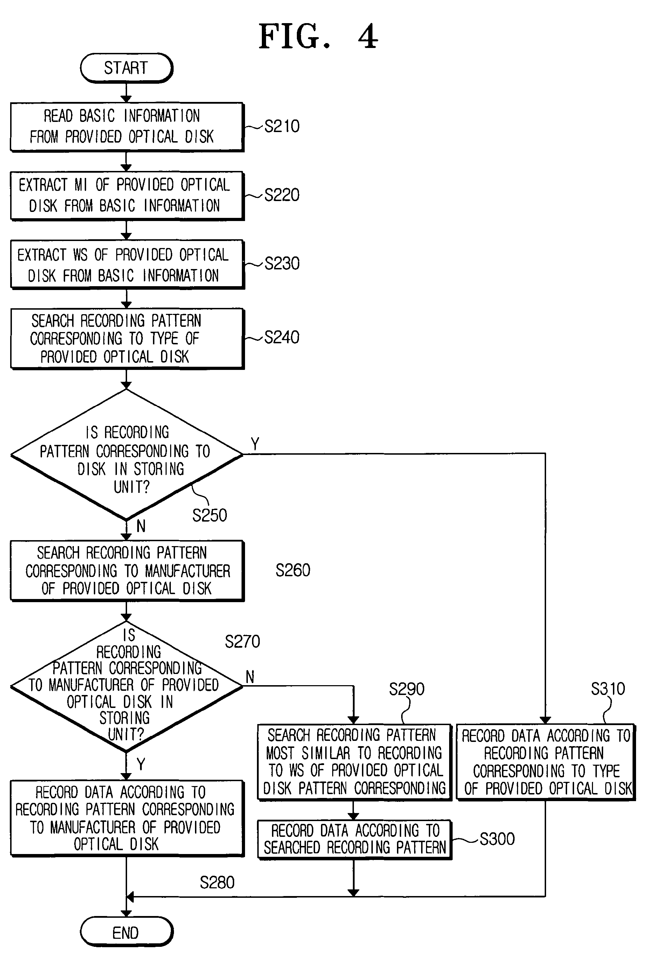

Hereinafter, a method for recording data on an optical disk according to an optimal recording pattern is explained with an assumption that the storing unit 160 stores the recording patterns shown in Figure 3, by referring to Figures 3 and 4.

Figure 4 is a flowchart of a method for recording data on an optical disk according to an optimal recording pattern in accordance with a preferred embodiment of the present invention. As shown, an optical disk 110 is provided to the optical disk recording apparatus and the recording unit 120 reads basic information recorded in the provided optical disk 110 at S210. The recording unit 120 supplies the read basic information to the MI extracting unit 130 and the WS extracting unit 140. The basic information includes the MI and the WS of the inserted optical disk 110 and the MI includes information about a type of the optical disk 110 and a manufacturer of the optical disk 110 as mentioned above.

The MI extracting unit 130 extracts the MI of the optical disk 110 from the basic information at S220 and the WS extracting unit 140 extracts the WS of the optical disk 110 from the basic information at S230. The MI extracting unit 130 and the WS extracting unit 140 transfer the extracted MI and WS to the controlling unit 150. The controlling unit 150 searches for a recording pattern corresponding to a type of the optical disk 110 in the storing unit 160 based on the extracted MI at S240.

If it is determined at S250 that there is no recording pattern for the provided optical disk 110 stored in the storing unit 160, the controlling unit 150 searches for a recording pattern corresponding to a manufacturer of the inserted optical disk 110 in the storing unit 160 based on the MI at S260. If it is determined at S270 that there is a recording pattern corresponding to the manufacturer of the inserted optical disk 110 in the storing unit 160, the controlling unit 150 controls the recording unit 120 to record data on the provided optical disk 110 based on the recording pattern obtained from the search which corresponds to the manufacturer of the inserted optical disk 110 at S280.

For example, if the provided optical disk 110 is an a3 type optical disk manufactured by manufacturer A, an a3-recording pattern is not stored in the storing unit 160 and the A-recording pattern 160-5, which is a general recording pattern of manufacturer A, is stored in the storing unit 160 as shown in Figure 3. Therefore, the A-recording pattern 160-5 is applied.

The optical disk recording apparatus selects the A-recording pattern for the provided optical disk because optical disks manufactured by the same manufacturer may have similar recording patterns. Therefore, the optical disk recording apparatus expects that the a3-recording pattern of the provided optical disk may be similar to the A-recording pattern 160-5.

After searching at S260, if it is determined at S270 that the recording pattern corresponding to the manufacturer is not stored in the storing unit 160, the controlling unit 150 searches for a recording pattern most similar to a recording pattern corresponding to the WS of the provided optical disk 110 at S290. Then, the controlling unit 150 controls the recording unit 120 to record data on the provided optical disk 110 according to the most similar recording pattern at S300.

For example, if the provided optical disk 110 is a c1-type optical disk manufactured by a manufacturer C, the storing unit 160 does not includes a c1-recording pattern and a C-recording pattern which is a general recording pattern for optical disks manufactured by the C manufacturer as shown in Figure 3. In this case, the optical disk recording apparatus searches a recording pattern most similar to the c1-recording pattern and records data on the optical disk according to the most similar recording pattern. For example, if the controlling unit 150 determines that the b1-recording pattern is most similar to the c1-recording pattern, the b1-recording pattern is selected as the recording pattern of the provided optical disk 110.

Also, if it is determined that the recording pattern corresponding to the provided optical disk 110, is stored in the storing unit 160 at S250, the controlling unit 150 controls the recording unit 120 to record data on the provided optical disk 110 according to a recording pattern corresponding to the type of the inserted optical disk 110, at S310.

For example, if the provided optical disk 110 is an a1-type optical disk manufactured by manufacturer A as shown in Figure 3, the optical disk recording apparatus records data on the provided optical disk 110 according to the a1-recording pattern at S310 because the a1-recording pattern is stored in the storing unit 160 as shown in Figure 3.

The operation S280 may be embodied in an alternate manner. For example, the optical disk recording apparatus may record data in a test area of the provided optical disk 110 according to the recording pattern most similar to the recording pattern corresponding to the WS of the provided optical disk 110 as a first test recording. Also, the optical disk recording apparatus may record data in the test area of the provided optical disk 110 according to a recording pattern corresponding to the manufacturer of the provided optical disk 110 as a second test recording. After test recording, the optical disk recording apparatus compares the recording results of the first test recording and the second test recording and selects one of the recording patterns corresponding to the WS and corresponding to the manufacturer that produces better results as an optimal recording pattern for the provided optical disk 110. After the selection, the optical disk recording apparatus records the data on the provided optical disk 110 based on the selected recording pattern.

The operation S310 may also be differently embodied according to the above-mentioned embodiment of the step S280. That is, the optical disk recording apparatus may perform first and second test-recordings in a test area of the optical disk according to a recording pattern of the optical disk type and according to a recording pattern mostly similar to a recording pattern corresponding to the WS of the optical disk 110, respectively. After the first and second test-recordings, the optical disk apparatus compares the results of the first and second test-recordings and selects the one producing the better result between the recording patterns. After the selection, the optical disk apparatus records data on the provided optical disk 110 according to the selected recording pattern.

As mentioned above, the optical disk recording apparatus of the present invention determines an optimal recording pattern of the provided optical disk even if there is no recording pattern corresponding to the WS of the provided optical disk stored in the storing unit, and records data on the provided optical disk according to the determined recording pattern. As a result, the recording quality is improved. Also, the optical disk recording apparatus can correctly record data on various optical disks even if a recording pattern of the provided optical disk is not provided.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical disk recording apparatus, comprising:
a storing unit (160) to store recording patterns corresponding to an optical disk type and recording patterns corresponding to an optical disk manufacturer;
a recording unit (120) to read basic information recorded in a provided optical disk and recording data on the provided optical disk according to a predetermined recording pattern;
a manufacturer information (MI) extracting unit (130) to extract manufacturer information (MI) including information about a type of the provided optical disk and a manufacturer of the provided optical disk from the basic information ; and
a controlling unit (150) to control the recording unit (120) to record data on the provided optical disk according to a recording pattern corresponding to the manufacturer of the provided optical disk when a recording pattern corresponding to the type of the provided optical disk is not stored in the storing unit (160).

2. The optical disk recording apparatus of claim 1, further comprising:
a write strategy (WS) extracting unit (140) to extract a write strategy (WS) from the basic information,
wherein the controlling unit (150) controls the recording unit (120) to record data on the provided optical disk according to a recording pattern most similar to a recording pattern corresponding to the WS of the provided optical disk among the recording patterns stored in the storing unit (160) when a recording pattern corresponding to the manufacturer of the provided optical disk and a recording pattern corresponding to the type of the provided optical disk are not stored in the storing unit (160).

3. The optical disk recording apparatus of claim 1, further comprising:
a write strategy (WS) extracting unit (140) to extract a write strategy (WS) from the basic information,
wherein the controlling unit (150) determines a recording pattern of the provided optical disk by comparing a first test result from a first test recording that performs a recording operation according to a recording pattern corresponding to the extracted type of the provided optical disk, and a second test result from a second test recording that performs a recording operation according to a recording pattern most similar to a recording pattern corresponding to the extracted WS of the provided optical disk among recording patterns stored in the storing unit (160), and controls the recording unit (120) to record data on the provided optical disk according to the determined recording pattern when a recording pattern corresponding to the extracted type of the provided optical disk is not stored in the storing unit (160).

4. The optical disk recording apparatus of claim 1, further comprising:
a write strategy extracting unit (140) to extract the write strategy of the inserted optical disk from the basic information,
wherein the controlling unit (150) determines a recording pattern of the provided optical disk by comparing a first test result from a first test recording that performs a recording operation according to a recording pattern corresponding to the extracted type of the provided optical disk and a second test result from a second test recording that performs a recording operation according to a recording pattern most similar to a recording pattern corresponding to the extracted WS of the provided optical disk among recording patterns stored in the storing unit (160), and controls the recording unit (120) to record data on the provided optical disk according to the determined recording pattern when a recording pattern corresponding to the extracted type of the provided optical disk is stored in the storing unit (160).

5. An optical disk recording method in an optical disk recording apparatus having a storing unit (160) storing recording patterns corresponding to optical disk types and recording patterns corresponding to optical disk manufacturers, the optical disk recording method comprising:
a) reading basic information recorded on a provided optical disk;
b) extracting information about a type and a manufacturer of the provided optical disk from the basic information ; and
c) recording data on the provided optical disk according to a recording pattern corresponding to the manufacturer of the provided optical disk when a recording pattern corresponding to the type of the provided optical disk is not stored in the storing unit (160).

6. The optical disk recording method of claim 5, further comprising:
extracting a write strategy (WS) of the provided optical disk from the basic information; and
recording data on the provided optical disk based on a recording pattern most similar to a recording pattern corresponding to the WS of the provided optical disk among the recording patterns stored in the storing unit (160) when a recording pattern corresponding to the manufacturer of the provided optical disk and a recording pattern corresponding to the type of the provided optical disk are not stored in the storing unit (160).

7. The optical disk recording method of claim 5, further comprising:
extracting a write strategy (WS) of the provided optical disk from the basic information;
determining a recording pattern of the provided optical disk by comparing a first test result from a first test recording that performs a recording operation according to a recording pattern corresponding to the extracted manufacturer of the provided optical disk, and a second test result from a second test recording that performs a recording operation according to a recording pattern most similar to a recording pattern corresponding to the extracted WS of the provided optical disk among recording patterns stored in the storing unit (160) when a recording pattern corresponding to the extracted type of the provided optical disk is not stored in the storing unit (160); and
recording data on the provided optical disk based on the determined recording pattern.

8. The optical disk recording method of claim 5, further comprising:
extracting the write strategy of the inserted optical disk from the basic information;
determining a recording pattern of the provided optical disk by comparing a first test result from a first test recording that performs a recording operation according to a recording pattern corresponding to the extracted type of the provided optical disk, and a second test result from a second test recording that performs a recording operation according to a recording pattern most similar to a recording pattern corresponding to the extracted WS of the provided optical disk among recording patterns stored in the storing unit (160) when a recording pattern corresponding to the extracted type of the provided optical disk is stored in the storing unit (160); and
recording data on the provided optical disk based on to the determined recording pattern.

9. An optical disk recording method, comprising:
reading basic information recorded on a provided optical disk;
extracting information about a manufacturer of the provided optical disk from the basic information; and
recording data on the provided optical disk based on a previously stored recording pattern corresponding to the manufacturer of the provided optical disk if available.

10. The optical disk recording method of claim 9, further comprising:
extracting a write strategy of the provided optical disk from the basic information; and
recording data on the provided optical disk based on a recording pattern most similar to a recording pattern corresponding to the write strategy of the provided optical disk among previously stored recording patterns, when a recording pattern corresponding to the manufacturer of the provided optical disk, is not available.

11. The optical disk recording method of claim 9, further comprising:
extracting a write strategy of the provided optical disk from the basic information;
determining a recording pattern of the provided optical disk by comparing a first test result from a first test recording operation corresponding to the extracted manufacturer of the provided optical disk; and
a second test result from a second test recording operation corresponding to the extracted write strategy of the provided optical disk, and previously stored recording patterns.

12. An optical disk recording method comprising:
reading a provided optical disk to determine whether a recording pattern corresponding to a write strategy of the provided optical disk, is accessible;
determining an optimal recording pattern of the provided optical disk when the recording pattern corresponding to the write strategy of the provided optical disk, is not accessible; and
recording data on the provided optical disk based on the determined optimal recording pattern.

13. The optical disk recording method of claim 12, wherein said determining comprises determining the optimal recording pattern based on manufacturer information on the provided optical disk if available.

14. The optical disk recording method of claim 12, wherein said determining comprises determining the optimal recording pattern based on a type of the provided optical disk if available.

15. The optical disk recording method of claim 13, wherein said reading includes reading basic information recorded on the provide optical disk, further comprising:
extracting a write strategy of the provided optical disk from the basic information; and
recording data on the provided optical disk based on a recording pattern most similar to a recording pattern corresponding to the write strategy of the provided optical disk from among recording patterns previously stored when a recording pattern corresponding to the manufacturer information, is not available.

16. An optical disk recording apparatus comprising:
means for reading a provided optical disk to determine whether a recording pattern corresponding to a write strategy of the provided optical disk, is accessible;
means for determining an optimal recording pattern of the provided optical disk when the recording pattern corresponding to the write strategy of the provided optical disk, is not accessible; and
means for recording data on the provided optical disk based on the determined optimal recording pattern.

17. The optical disk recording apparatus of claim 16, wherein said means for determining comprises means for determining the optimal recording pattern based on manufacturer information on the provided optical disk if available.

18. The optical disk recording apparatus of claim 16, wherein said means for determining comprises means for determining the optimal recording pattern based on a type of the provided optical disk if available.
